# EUROPEAN PATENT SPECIFICATION

(11) **EP 1 704 078 B1**
(45) Date of publication and mention of the grant of the patent: **15.08.2007**
(21) Application number: 05702188.3
(22) Date of filing: 07.01.2005
(51) Int. Cl.: B62D 7/20, B62D 7/16

(54) **STEERING AXLE FOR VEHICLES, IN PARTICULAR FOR PUBLIC WORKS VEHICLES OR AGRICULTURAL TRACTORS**
LENKACHSE FÜR FAHRZEUGE, INSBESONDERE FÜR ARBEITSMASCHINEN ODER ACKERSCHLEPPER
ESSIEU DIRECTEUR POUR VEHICULES ET NOTAMMENT POUR ENGINS DE TRAVAUX PUBLICS OU TRACTEURS AGRICOLES

(30) Priority: 09.01.2004 IT TO20040008
(43) Date of publication of application: 27.09.2006
(73) Proprietor: Casarola, Pietro, 74014 Laterza (TA) (IT)
(72) Inventor: Casarola, Pietro, 74014 Laterza (TA) (IT)
(74) Representative: Rondano, Davide
(86) International application number: PCT/IB2005/000017
(87) International publication number: WO 2005/068278

(56) References cited:
- US-A- 3 411 804
- US-A- 4 986 386
- US-A- 5 236 059

## Description

The present invention relates to a steering for per vehicles, in particular per public works vehicles or agricultural tractors, as known from the US 5 236 059 defined in the preamble of Claim 1.

The above-mentioned type of vehicles usually has steering problems due to the necessity to satisfy the need of producing small-sized vehicles, with as large tyres as possible and with an equilibrated mass balance between the front and the rear axle. The need to contain the size of the vehicle is connected for example to the necessity to comply with road traffic regulations or to allow movement in narrow spaces, such as for instance in orchards. The need to provide the vehicle with large-sized tyres is connected to the fact that for example the traction, the load capacity and the height from the ground increase as the size of the tyre increases. Finally, as far as the necessity to ensure an equilibrated mass balance is concerned, it is known that a more equilibrated mass balance of the vehicle between the two axles, and accordingly an increase in the performance and comfort, is achieved by shifting the motor and/or other components of the vehicle to the front side. These needs, however, negatively affect the steering performance of the vehicle, since they reduce the space available between the tyres and the mechanical parts and therefore the maximum steering angle.

In order to ensure adequate steering angles in the public works vehicles or in the agricultural tractors of recent production, one or more of the above-mentioned requirements have therefore to be penalised from time to time, with a consequent reduction in the performances of the vehicle.

It is therefore the object of the present invention to provide a steering axle for a vehicle, such as a public works vehicle or an agricultural tractor, which enables to reach large steering angles without compelling to penalise the performances of the vehicle.

This and other object are fully achieved according to the invention by virtue of a steering axle having the characteristics defined in the characterising portion of Claim 1. Further advantageous characteristics of the invention are set forth in the dependent claims.

In short, the invention is based on the idea to construct a steering axle comprising:
a stationary support structure, which extend substantially along the transverse direction of the vehicle and is open at its two opposite transverse ends;
a pair of telescopic parts, each accommodated in the support structure so as to be able to slide along the transverse direction;
a pair of hub carriers each of which is articulated by means of a joint to a transversely outer end of the respective telescopic part for rotation about an essentially vertical steering axis; and
a pair of connecting members which connect each a respective hub carrier to the support structure and are configured to bring about an extension/retraction movement of the telescopic parts relative to the support structure as the steering angle varies, so as to move the steering axles of the hub carriers transversely away from the vehicle structure during the steering operation.

Preferably, the steering axle further comprises a transverse rod, articulated at its opposite ends to the two connecting members so as to co-ordinate the rotation of the two hub carriers during the steering operation.

Preferably, the two connecting members can be formed as simple rods, each articulated at its ends to the respective hub carrier and to the support structure. In this case, the longitudinal axis of each rod, that is the axis which connects the centres of articulation of the rod, has to pass through the steering axis of the respective hub carrier.

According to a variant of construction, the two connecting members can be formed as plates each of which is attached to the respective hub carrier and has a slot in which slidably engages a respective pin attached to the support structure, the slot being configured in such a manner that it brings about the extension/retraction movement of the respective telescopic part with a predetermined law as the steering angle varies.

Further characteristics and advantages of the invention will clearly result from the detailed description which follows, given purely by way of non-limiting example with reference to the appended drawings, in which:
Figure 1 is a perspective view showing one half of a steering front axle for vehicles, in particular for public works vehicles or agricultural tractors, according to a first preferred embodiment of the present invention;
Figure 2 is a plan view of the axle of Figure 1, in a condition in which the steering angle is zero;
Figures 3 and 4 are plan views of the axle of Figure 1, in a condition in which the steering angle is +α and -α, respectively;
Figures 5A and 5B illustrate the rightward steering operation, in the case of a steering front axle according to the prior art and in the case of the steering front axle of Figure 1, respectively;
Figures 6A and 6B illustrate the leftward steering operation, in the case of a steering front axle according to the prior art and in the case of the steering front axle of Figure 1, respectively;
Figure 7 is a plan view showing one half of a steering front axle for vehicles, in particular for public works vehicles or agricultural tractors, according to another preferred embodiment of the present invention; and
Figures 8 are 9 are plan views of the axle of Figure 7, in a condition in which the steering angle is +α and -α, respectively.

In the description and the claims which follow, terms such as "front" and "rear", "upper " and "lower", "longitudinal" and "transverse" are to be intended as referred to the mounted condition on the vehicle. For obvious reasons of simplicity, only one of the two symmetrical parts forming the structure of the steering axle of the invention will be described, it being clearly understood that the part not described is to be retained as substantially identical to the one described. Moreover, even though the invention is described and illustrated with reference to a driving front axle, it is clear that it can be applied also to a non-driving axle or to a rear axle.

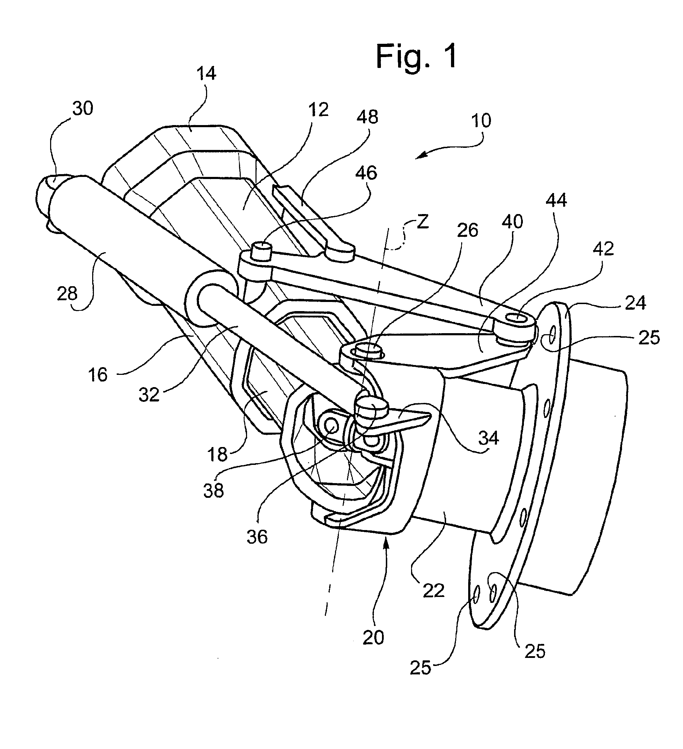

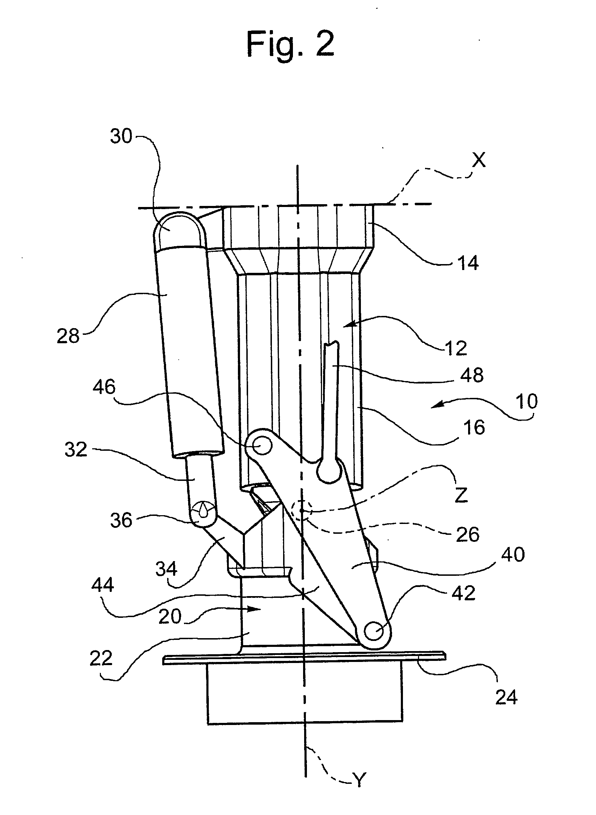

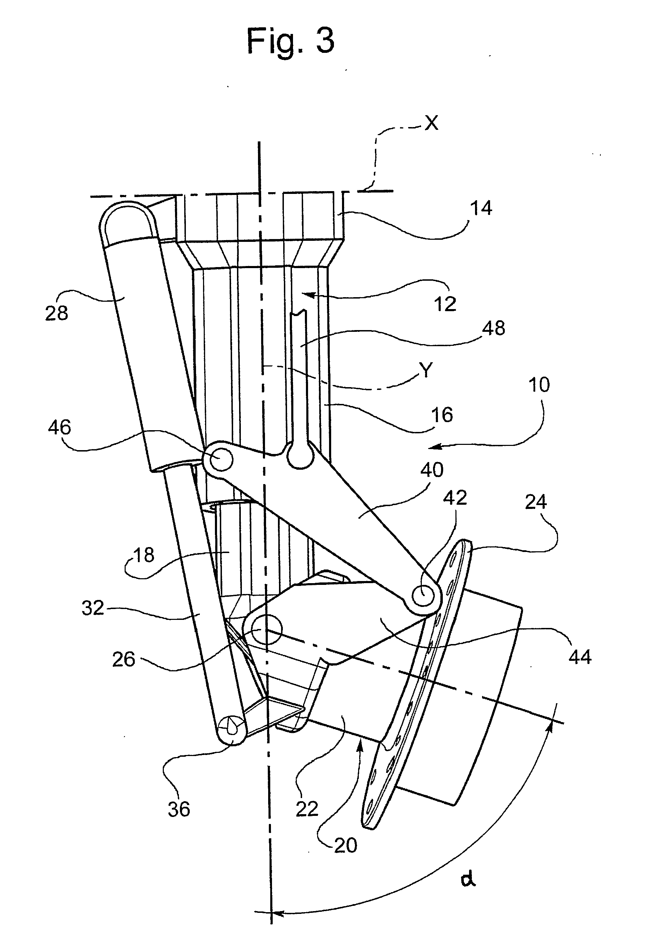

Referring first to Figure 1, a steering front axle for a vehicle, in particular for a public works vehicle or an agricultural tractor, according to a preferred embodiment of the present invention is generally indicated 10. The axle 10 basically comprises:
a support structure 12 intended to be fixed to the vehicle structure and including a box-like middle portion 14 (of which only one half is shown in the figures) adapted to accommodate a differential unit, per-se-known and not shown, and a hollow side portion 16 which extends substantially along the transverse direction of the vehicle (defined by an axis Y in Figures 2 to 4) and is open at its transversely outer end;
a telescopic part 18, which preferably has also a hollow structure and is slidably accommodated in the hollow side portion 16 of the support structure 12 so as to be able to move between a retracted position (Figure 2), in which the telescopic part 18 is essentially fully received within the hollow side portion 16, and an extended position (Figure 3), in which the telescopic part 18 projects partially outside of the hollow side portion 16; and
a hub carrier 20 for rotatably supporting a hub which comprises, in per-se-known manner, a rotating box 22, in which an epicyclical reduction gear unit and a braking device (not shown) are accommodated, and is provided with a disc 24 which is securely connected for rotation with the box 22 and has a plurality of through holes 25 for fixing, by means of bolts or other threaded connecting members, a wheel rim (not shown).

A certain play, an adequate roughness of the sliding surfaces and an efficient lubrication system are provided between the telescopic part 18 and the hollow side portion 16 of the support structure 12 in order to reduce to a minimum the friction between the parts and hence the wear.

The hub carrier 20 is articulated to the end of the telescopic part 18 by means of a pair of pins 26 (of which only the upper one can be seen in Figure 1) so as to be able to rotate about a normally vertical steering axis Z. The rotational movement of the hub carrier 20 about the steering axis Z is controlled by an actuator device of per-se-known type, such as for example a fluid jack comprising a cylinder 28 articulated at its transversely inner end to the support structure 12 of the axle 10 or to another stationary part of the vehicle by means of an articulation head 30, and a plunger provided with a rod 32 articulated at its transversely outer end to a bracket 34 provided with articulation head 36 and carried by the hub carrier 20. The arrangement of the jack may naturally be inverted, that is to say the cylinder 28 may be articulated to the hub carrier 20 and the rod 32 to the support structure 12. Moreover, according to a variant of construction (not shown), the jack may be articulated at its transversely inner end to the telescopic part 18 of the axle 10, instead of the support structure 12. This makes it possible reduce the axial dimension of the jack, and therefore its cost too.

A telescopic axle shaft, not shown, is rotatably mounted within the telescopic part 18 and is connected by means of a universal joint 38, or by means of any other appropriate connecting device, to an input shaft of the epicyclical gear reduction unit accommodated in the rotating box 22 for transmitting torque from the differential unit to the wheel hub.

The steering axle 10 further comprises, according to the invention, a connecting member 40 which connects the hub carrier 20 to the support structure 12, in particular to the hollow side portion 16. The connecting member 40 us in this case formed as a rod articulated at its transversely outer end to the hub carrier 20 by means of a vertical pin 42 carried by a bracket 44 attached to the hub carrier 20 and at its transversely inner end to the hollow side portion 16 by means of a vertical pin 46 attached thereto.

There is also provided a third transverse rod or bar 48, which is articulated at its ends to the connecting rods 40 of the two wheels (only one of which is shown in the figures) in order to co-ordinate the rotation of the two hub carriers 20. However, other means may be provided in order to co-ordinate the rotation of the two hub carriers 20.

As.can be seen in the plan view of Figure 2, the steering axle 10 is configured in such a manner that when the vehicle is running along a straight way, that is to say when the wheels are orientated parallel to a longitudinal axis X of the vehicle, the longitudinal axis of the connecting rod 40, indicated L, in other words the axis connecting the centres of articulation of the rod, passed through the centre of the vertical pins 26 by means of which the hub carrier 20 rotates with respect to the telescopic part 18. In this condition, the telescopic part 18 is wholly retracted in the hollow side portion 16 of the support structure 12.

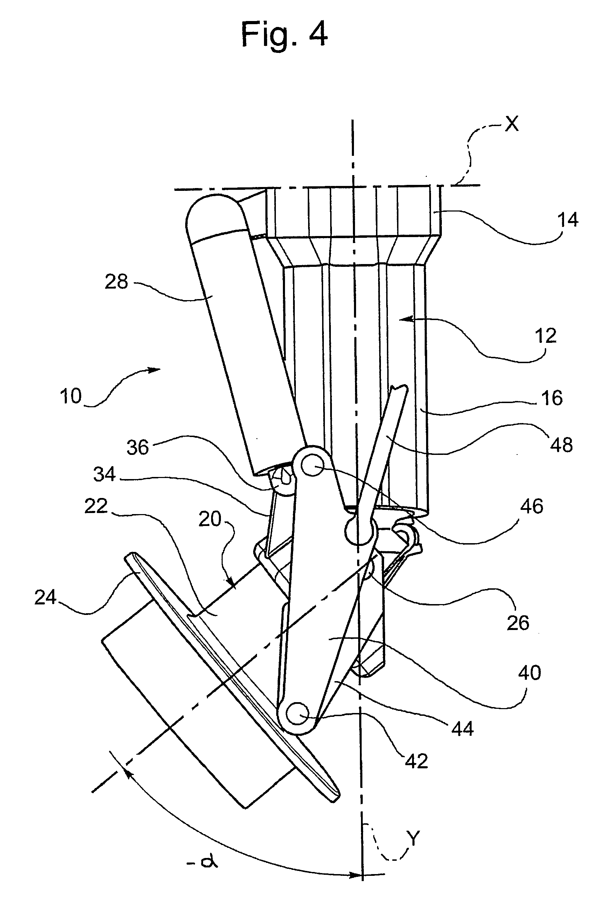

If the hub carrier 20 is now rotated for example anticlockwise (Figure 3) through the hydraulic jack 28, as a result of the additional constraint represented by the connecting rod 40 the telescopic part 18 comes out of the hollow side portion 18 of the support structure 12 by an amount which increases as the steering angle (indicated α in Figure 3) increases. Accordingly the axis of rotation Z of the hub carrier is moved away from the longitudinal axis X of the vehicle and therefore the risk of interference between the wheel and the mechanical parts of the vehicle is reduced. The same applies in case of clockwise rotation of the hub carrier 20, as illustrated in Figure 4.

When the telescopic part 18 of the front axle comes out of the support structure 12, the transmission of the torque between the differential unit and the epicyclical gear reduction unit of the front wheel is however ensured by the use of the above-mentioned telescopic axle shaft.

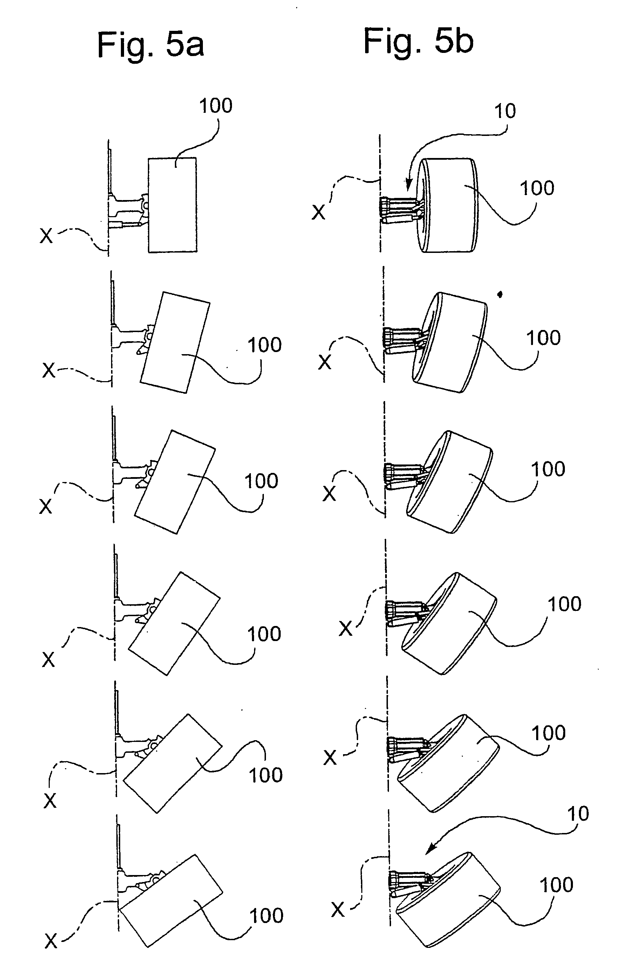

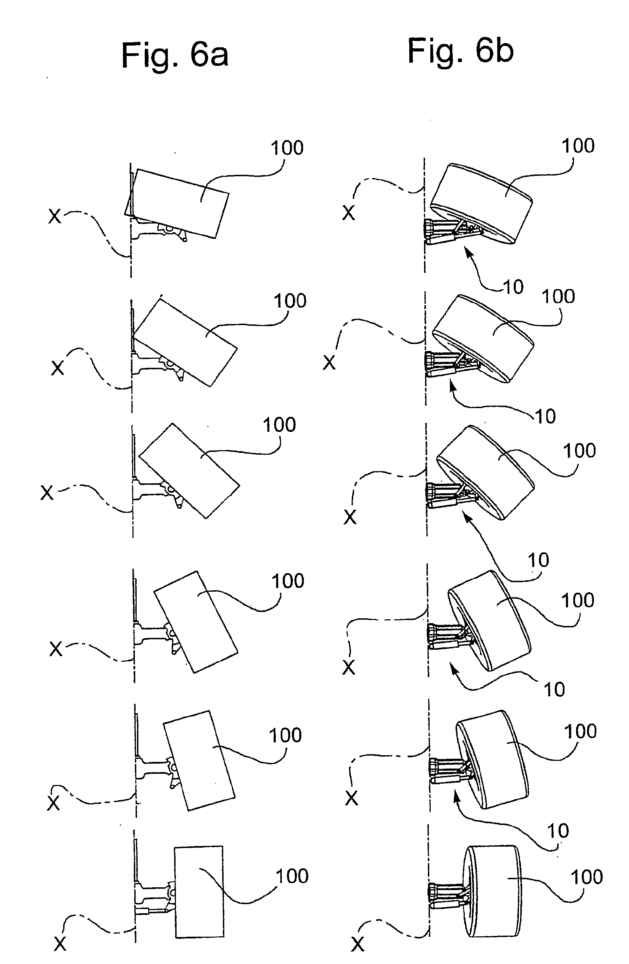

The advantage which can be achieved by virtue of a steering axle according to the invention in terms of increase in the maximum steering angle can be clearly realised from Figures 5A, 6A and 5B, 6B, which illustrate leftward and rightward steering operations in case of a steering front axle according to the prior art and according to the invention, respectively. In fact, it can be noted that with the same steering angle the minimum distance between the wheel, indicated 100, and the longitudinal axis X of the vehicle is greater in an axle according to the invention than in a conventional axle. In the axle according to the invention, in fact, the distance between the steering axis Z of the wheel and the longitudinal axis X of the vehicle increases as a result of the extension of the telescopic part 18 coming out of the support structure 12.

From the above description it clearly appears therefore that a steering axle according to the present invention makes it possible to:
- reduce the space required for the steering operation, thereby allowing to use larger tyres for the same width of the vehicle;
- increase the manoeuvrability of the vehicle, thanks to the possibility to increase the maximum steering angle;
- reduce the vehicle design costs connected to the analysis of the correct location of the engine and/or of the other mechanical parts in order to avoid interference with the front tyres during the steering operation.

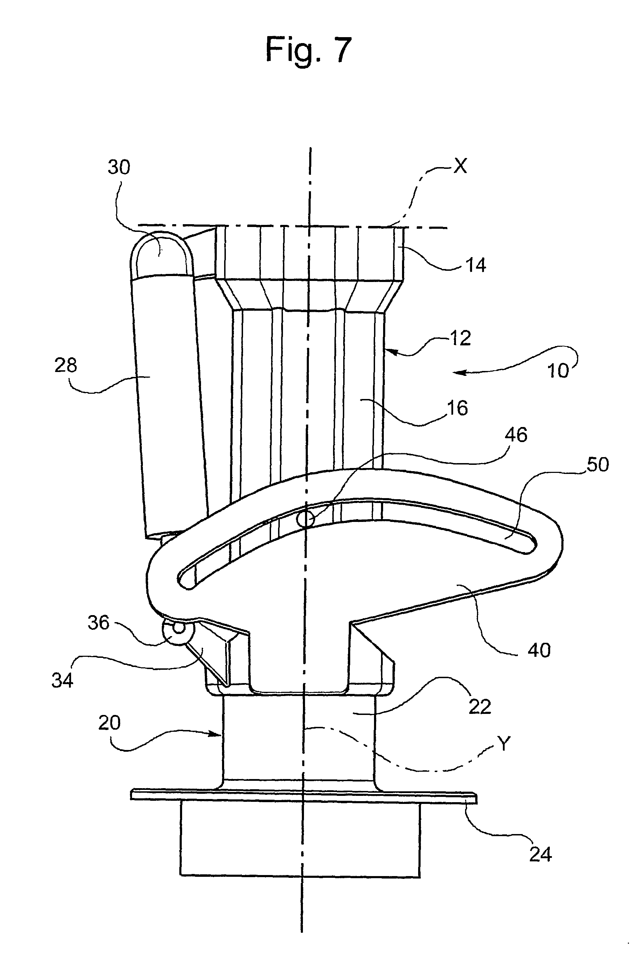

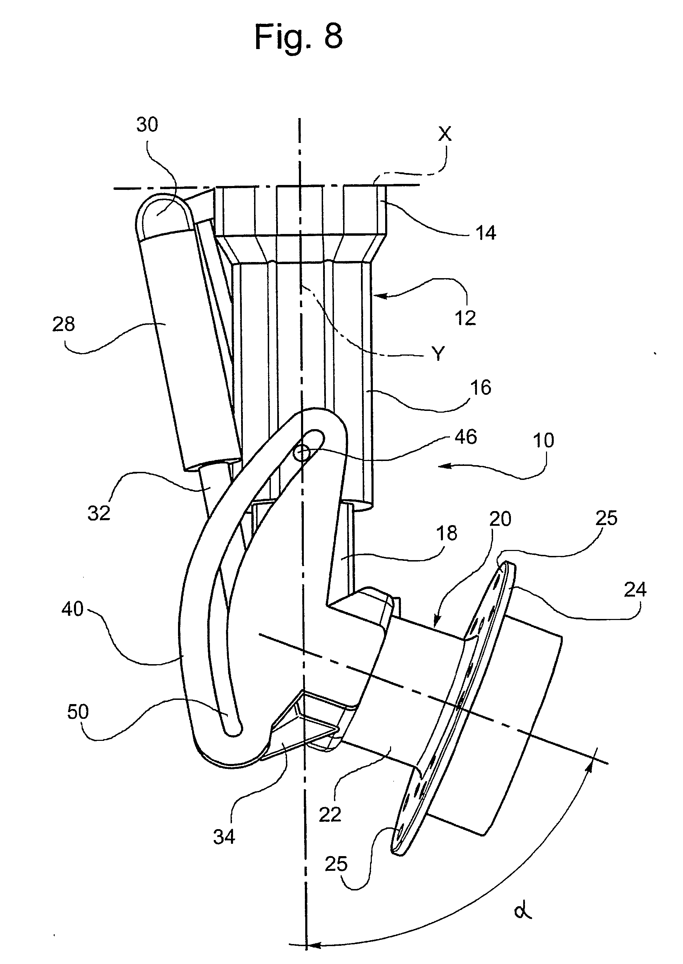

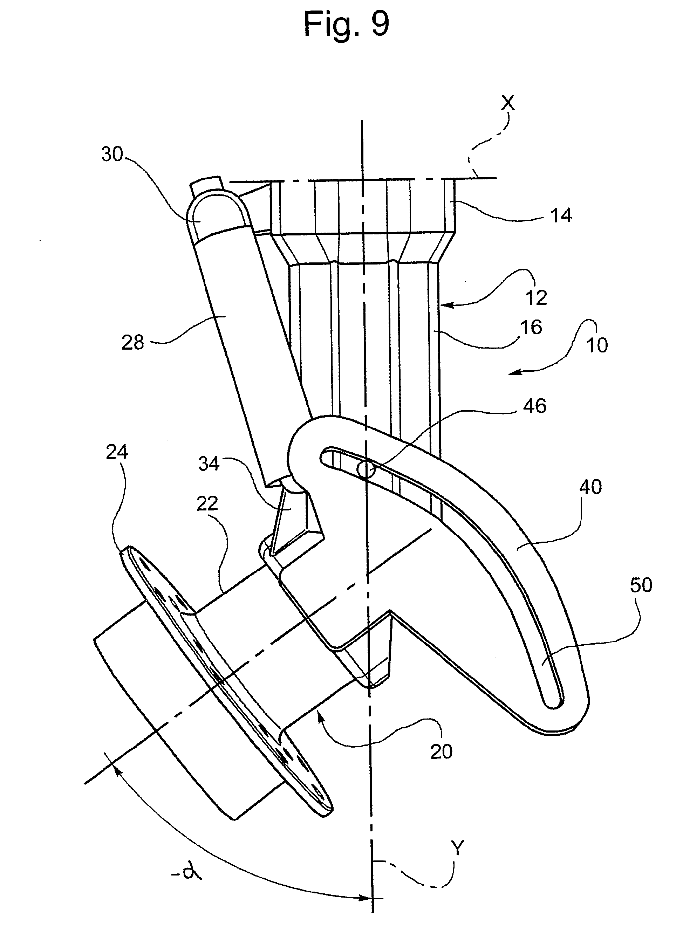

A second preferred embodiment of a steering axle according to the invention is illustrated in Figures 7 to 9, in which parts and components identical or corresponding to those of Figures 1 to 4 have been indicated with the same reference numerals.

This second embodiment differs from the first substantially in that the connecting member 40 is a plate element which on the one side is attached to the hub carrier 20 and on the other has a slot 50 in which slidably engages a pin 46 attached to the hollow side portion 16 of the support structure 12. The shape of the slot determined the law of the movement of the telescopic part 18 extending or retracting with respect to the hollow side portion 16 of the support structure 12 as the steering angle varies.

This second arrangement thus offers a greater versatility of use, since it enables to obtain laws of movement adapted to the specific requirements of the vehicle to which axle is intended. Moreover, it allows to reduce the number of components of the axle, since it requires neither an articulated connection between the connecting member 40 and the hub carrier 20 nor a connecting rod or bar between the two hub carriers 20 to co-ordinate the steering movement thereof.

Naturally, the principle of the invention remaining unchanged, embodiments and manufacturing details may vary widely from those described and illustrated purely by way of non-limiting example.

## Claims

1. Steering axle (10) for a vehicle, in particular for a public works vehicle or an agricultural tractor, comprising:
a support structure (12);
a pair of hub carriers (20) each rotatable about a respective steering axis (Z);
actuator means (28, 30, 32) for controlling rotation of the hub carriers (20) about the respective steering axes(Z);
**characterised in that** it further comprises:
a pairs of telescopic parts (18), each of which is accommodated in the support structure (12) so as to be able to slide in an essentially transverse direction (Y) and carries, articulated to its transversely outer end, a respective hub carrier (20); and
connecting means (40) which connect each hub carrier (20) to the support structure (12) and are configured to bring about an extension/retraction movement of the telescopic parts (18) with respect to the support structure (12) as the angle of rotation (α) of the hub carriers about the respective steering axes (Z) varies, whereby the said axes (Z) are moved transversely away from the structure of the vehicle during the steering operation.

2. An axle according to Claim 1, wherein the said connecting means include a pair of rods (40), each of which is articulated at its opposite ends to the respective hub carrier (20) and to the support structure (12).

3. An axle according to Claim 2, wherein the said pair of connecting rods (40) are configured in such a manner that in the non-steered condition an axis (L) passing through the centres of articulation of each of the two connecting rods (40) intersects the steering axis (Z) of the respective hub carrier (20).

4. An axle according to Claim 2 or 3, further comprising a third connecting rod (48) articulated to the said pair of connecting rods (40).

5. An axle according to Claim 1, wherein the said connecting means include a pair of plate members (40) each of which on the one side is attached to the respective hub carrier (20) and on the other has a slot (50) in which slidably engages a pin (46) attached to the support structure (12) .

6. An axle according to Claim 5, wherein the slots (50) of the plate members (40) are configured in such a manner that they bring about an extension/retraction movement of the telescopic parts (18) according to a predetermined law of movement.

7. An axle according to Claim 1, wherein the support structure (12) includes a box-like middle portion (14), intended to accommodate a differential unit, and a pair of hollow side portions (16) which extend substantially in the transverse direction (Y) of the vehicle and accommodate the said pair of telescopic parts (18).

8. An axle according to Claim 1, wherein each of the said pair of telescopic parts (18) accommodate a telescopic axle shaft for transmitting torque to the respective hub carrier (20).

9. An axle according to Claim 1, wherein the said actuator means include a pair of hydraulic jacks each comprising a cylinder (28) articulated (30) to the support structure (12) or to the respective hub carrier (20) and a plunger provided with rod (32) articulated (36) to the hub carrier (20) or to the support structure (12), respectively.

10. An axle according to Claim 1, wherein the said actuator means include a pair of hydraulic jacks each comprising a cylinder (28) articulated (30) to the respective telescopic part (18) or to the respective hub carrier (20) and a plunger provided with rod (32) articulated (36) to the hub carrier (20) or to the telescopic part (18), respectively.

## Patentansprüche

1. Lenkachse (10) für ein Fahrzeug, im Besonderen für ein Fahrzeug im Tiefbau oder für einen landwirtschaftlichen Traktor, wobei die Lenkachse enthält:
einen Tragaufbau (12);
ein Paar von Radnabenträgern (20), von denen jeder um eine entsprechende Drehachse (Z) drehbar ist;
ein Stellglied (28, 30, 32), um die Drehung der Radnabenträger (20) um die entsprechenden Drehachse (Z) zu steuern;
**dadurch gekennzeichnet, dass** die Lenkachse weiters enthält:
ein Paar von teleskopartigen Bauteilen (18), von denen jeder im Tragaufbau (12) so aufgenommen wird, dass er im Wesentlichen in Querrichtung (Y) gleiten kann, wobei er an seinem querliegenden Außenende gelenkig einen entsprechenden Radnabenträger (20) trägt; und
eine Verbindungseinrichtung (40), die jeden Radnabenträger (20) mit dem Tragaufbau (12) verbindet, wobei sie so aufgebaut ist, dass sie eine Ausfahr/Einfahr-Bewegung der teleskopartigen Bauteile (18) zum Tragaufbau (12) hervorruft, wenn sich der Drehwinkel (α) der Radnabenträger um die entsprechenden Drehachse (Z) verändert, wodurch die Achsen (Z) während des Lenkvorgangs quer vom Aufbau des Fahrzeugs weg bewegt werden.

2. Achse gemäß Anspruch 1, wobei die Verbindungseinrichtung ein Paar von Stangen (40) aufweist, von denen jede an ihren einander gegenüber liegenden Enden im entsprechenden Radnabenträger (20) und im Tragaufbau (12) gelenkig gelagert ist.

3. Achse gemäß Anspruch 2, wobei das Paar von Verbindungsstangen (40) so aufgebaut ist, dass im nicht gelenkten Zustand eine Achse (L), die durch die Gelenksmittelpunkte einer jeden der beiden Verbindungsstangen (40) verläuft, die Drehachse (Z) des entsprechenden Radnabenträgers (20) schneidet.

4. Achse gemäß Anspruch 2 oder 3, wobei die Achse weiters eine dritte Verbindungsstange (48) besitzt, die im Paar von Verbindungsstangen (40) gelenkig gelagert ist.

5. Achse gemäß Anspruch 1, wobei die Verbindungseinrichtung ein Paar von Plattenelementen (40) aufweist, von denen jedes auf einer Seite am entsprechenden Radnabenträger (20) befestigt ist und auf der anderen Seite einen Schlitz (50) besitzt, in den ein Zapfen (46) gleitend eingreift, der am Tragaufbau (12) angebracht ist.

6. Achse gemäß Anspruch 5, wobei die Schlitze (50) der Plattenelemente (40) so ausgebildet sind, dass sie in Übereinstimmung mit einem vorgegebenen Bewegungsgesetz eine Ausfahr/Einfahr-Bewegung der teleskopartigen Bauteile (18) erzeugen.

7. Achse gemäß Anspruch 1, wobei der Tragaufbau (12) einen kastenartigen Mittelteil (14), der dazu vorgesehen ist, um eine Differentialeinheit aufzunehmen, sowie ein Paar von hohlen Seitenteilen (16) aufweist, die im Wesentlichen in Querrichtung (Y) des Fahrzeugs verlaufen und das Paar von teleskopartigen Bauteilen (18) aufnehmen.

8. Achse gemäß Anspruch 1, wobei jedes der Paare der teleskopartigen Bauteile (18) eine teleskopartige Achswelle aufnimmt, um zum entsprechenden Radnabenträger (20) ein Drehmoment zu übertragen.

9. Achse gemäß Anspruch 1, wobei das Stellglied ein Paar von Hydraulikkolben aufweist, von denen jeder einen Zylinder (28), der am Tragaufbau (12) oder am entsprechenden Radnabenträger (20) gelenkig gelagert (30) ist, sowie einen Kolben enthält, der mit einer Stange (32) versehen ist, die am Radnabenträger (20) bzw. am Tragaufbau (12) gelenkig gelagert (36) ist.

10. Achse gemäß Anspruch 1, wobei das Stellglied ein Paar von Hydraulikkolben aufweist, von denen jeder einen Zylinder (28), der am entsprechenden teleskopartigen Bauteil (18) oder am entsprechenden Radnabenträger (20) gelenkig gelagert (30) ist, sowie einen Kolben enthält, der mit einer Stange (32) versehen ist, die am Radnabenträger (20) bzw. am teleskopartigen Bauteil (18) gelenkig gelagert (36) ist.

## Revendications

1. Essieu directeur (10) pour un véhicule, en particulier pour un engin de travaux publics ou un tracteur agricole, comprenant :
une structure de support (12) ;
une paire de porte-moyeu (20) aptes à tourner chacun autour d'un axe de pivotement respectif (Z) ;
un moyen d'actionnement (28, 30, 32) pour commander la rotation des porte-moyeu (20) autour des axes de pivotement respectifs (Z) ;
**caractérisé en ce qu'**il comprend en outre :
une paire de parties télescopiques (18), chacune d'entre elles étant logée dans la structure de support (23) de façon à être apte à glisser dans une direction essentiellement transversale (Y) et portant un porte-moyeu (20) respectif articulé sur son extrémité transversalement extérieure ; et
un moyen de liaison (40) qui relie chaque porte-moyeu (20) à la structure de support (12) et configuré pour permettre un mouvement d'extension/rétraction des parties télescopiques (18) par rapport à la structure de support (12) lorsque varie l'angle de rotation (α) des porte-moyeu autour des axes de pivotement respectifs (Z), moyennant quoi lesdits axes (Z) sont éloignés transversalement de la structure du véhicule pendant l'opération de braquage.

2. Essieu selon la revendication 1, dans lequel ledit moyen de liaison comprend une paire de biellettes (40), chacune d'entre elles étant articulée en ses extrémités opposées sur le porte-moyeu respectif (20) et sur la structure de support (12).

3. Essieu selon la revendication 2, dans lequel ladite paire de biellettes (40) est configurée de telle manière que dans l'état non braqué, un axe (L) passant par les centres d'articulation des deux biellettes (40) coupe l'axe de pivotement (Z) du porte-moyeu respectif (20).

4. Essieu selon la revendication 2 ou 3, comprenant en outre une troisième biellette (48) articulée sur ladite paire de biellettes (40).

5. Essieu selon la revendication 1, dans lequel ledit moyen de liaison comprend une paire d'éléments plats (40), chacun étant fixé d'un côté au porte-moyeu respectif (20) et ayant de l'autre côté une fente (50) dans laquelle s'engage de manière glissante un axe (46) fixé à la structure de support (12).

6. Essieu selon la revendication 5, dans lequel les fentes (50) des éléments plats (40) sont configurées de telle manière qu'elles permettent un mouvement d'extension/rétraction des parties télescopiques (18) selon une loi de mouvement prédéterminée.

7. Essieu selon la revendication 1, dans lequel la structure de support (12) comporte une partie médiane en forme de boîte (14), dans laquelle est destinée à être logée une unité différentielle, et une paire de parties latérales creuses (16) qui s'étendent substantiellement dans la direction transversale (Y) du véhicule et dans lesquelles sont logées lesdites parties télescopiques (18).

8. Essieu selon la revendication 1, dans lequel chacune desdites parties télescopiques (18) comporte un axe télescopique pour transmettre un couple au porte-moyeu respectif (20).

9. Essieu selon la revendication 1, dans lequel ledit moyen d'actionnement comprend une paire de vérins hydrauliques comprenant chacun un cylindre (28) articulé (30) sur la structure de support (12) ou sur le porte-moyeu respectif (20) et un piston pourvu d'une tige (32) articulée (36) sur le porte-moyeu (20) ou sur la structure de support (12), respectivement.

10. Essieu selon la revendication 1, dans lequel ledit moyen d'actionnement comprend une paire de vérins hydrauliques comprenant chacun un cylindre (28) articulé (30) sur la partie télescopique respective (18) ou sur le porte-moyeu respectif (20) et un piston pourvu d'une tige (32) articulée (36) sur le porte-moyeu (20) ou sur la partie télescopique (18), respectivement.
